# EUROPÄISCHE PATENTSCHRIFT

(11) **EP 3 130 063 B1**
(45) Veröffentlichungstag und Bekanntmachung des Hinweises auf die Patenterteilung: **13.06.2018**
(21) Anmeldenummer: 15734107.4
(22) Anmeldetag: 29.06.2015
(51) Int. Cl.: H02K 5/10, H02B 1/28, H02K 5/136, H02K 7/18

(54) **SCHUTZSYSTEM FÜR EINE ELEKTRISCHE MASCHINE**
PROTECTION SYSTEM FOR AN ELECTRIC MACHINE
SYSTÈME DE PROTECTION POUR UNE MACHINE ÉLECTRIQUE

(30) Priorität: 08.07.2014 EP 14176105
(43) Veröffentlichungstag der Anmeldung: 15.02.2017
(73) Patentinhaber: Siemens Aktiengesellschaft, 80333 München (DE)
(72) Erfinder: ECKE, Christian-Jörg, 10243 Berlin (DE); THURLEY, René, 14547 Beelitz (DE)
(86) Internationale Anmeldenummer: PCT/EP2015/064667
(87) Internationale Veröffentlichungsnummer: WO 2016/005217

(56) Entgegenhaltungen:
- EP-A1- 0 482 414
- EP-A1- 1 607 250
- WO-A1-03/043163
- DE-A1- 3 328 784
- DE-A1-102010 000 804
- GB-A- 2 292 639
- US-A1- 2010 187 025

## Beschreibung

Die Erfindung betrifft ein Schutzsystem für eine elektrische Maschine, wobei die elektrische Maschine ein Gehäuse aufweist, welches einen Innenraum der elektrischen Maschine gegenüber einem die elektrische Maschine umgebenden Außenraum abgrenzt. Weiterhin betrifft die Erfindung eine elektrische Maschine, welche ein Gehäuse, welches einen Innenraum der elektrischen Maschine gegenüber einem die elektrische Maschine umgebenden Außenraum abgrenzt, und ein derartiges Schutzsystem aufweist.

Ein derartiges Schutzsystem bzw. eine derartige elektrische Maschine kommen beispielsweise im Umfeld von staubigen bzw. explosionsfähigen Medien zum Einsatz. Werden Elektromaschinen und insbesondere Hochspannungs-Elektromaschinen im Bereich von explosionsfähigen Medien betrieben, muss ein Eindringen zündfähiger Stoffe in den Innenbereich der Maschinen verhindert werden.

Wird die Maschine nach ihrem Betrieb abgeschaltet, hat diese noch eine Restwärme, so dass beim Abkühlen der Maschine ein Unterdruck im Innenbereich der Maschine entsteht. Jedoch ist bei Maschinen mit mehrteiligen Gehäusen eine hundertprozentige Dichtigkeit mit vertretbarem technischem Aufwand nicht erreichbar. Entsprechend wird Außenluft in die Maschine gesaugt. Mit dieser Luft kann auch zündfähiger Staub in die Maschine gelangen. Bei staub-explosionsgeschützten Maschinen ist Staub in der Maschine allerdings nicht zulässig, weil ansonsten Explosionsgefahr besteht. Deshalb musste die Maschine bisher vor einer erneuten Inbetriebnahme aufwändig gereinigt werden.

Aus der EP 0 482 414 A1 ist ein Zündschutz-Gehäuse zur Aufnahme elektrische Einrichtungen unter Tage bekannt, wobei ein Überdruckgehäuse mit einer Druckluftleitung vorgesehen ist, in welchem ein Ventil und ein Filter angeordnet sind.

Aus der US 2010/0187025 A1 ist eine Schutzvorrichtung für eine Motorisolation bekannt, wobei eine Kammer mit einem Elektromotor über eine Leitung mit Überdruck beaufschlagt wird und ein Sicherheitsventil vorgesehen ist.

Aus der WO 03/043163 A1 ist eine elektrische Maschine mit einem mit Schutzgas gefülltem Hohlraum bekannt.

Aus der EP 1 607 250 A1 ist ein selbstkühlender Aktuator bekannt, wobei der Aktuator ein Gehäuse, einen Filter und ein Ventil aufweist.

Der Erfindung liegt die Aufgabe zugrunde, ein Schutzsystem bzw. eine elektrische Maschine mit einem verbesserten Schutz der elektrischen Maschine, insbesondere einem verbesserten Explosionsschutz, bereitzustellen.

Diese Aufgabe wird durch ein Schutzsystem der eingangs genannten Art dadurch gelöst, dass das Schutzsystem eine erste Verbindungsleitung, mittels welcher der Innenraum mit dem Außenraum verbindbar ist, ein Ventil und einen Filter aufweist, welcher für Staub undurchlässig ist, wobei das Ventil und die erste Verbindungsleitung derart ausgestaltet sind, dass die erste Verbindungsleitung bei geschlossenem Ventil nicht durchgängig ist, wobei das Ventil und die erste Verbindungsleitung derart ausgestaltet sind, dass ein erstes gasförmiges Medium vom Außenraum bei geöffnetem Ventil in den Innenraum eindringen kann, wobei der Filter derart angeordnet ist, dass das durch die erste Verbindungsleitung vom Außenraum in den Innenraum eindringende, erste gasförmige Medium filterbar ist, wobei das Schutzsystem einen Druckbehälter zur Bevorratung eines zweiten gasförmigen Mediums aufweist, wobei der Druckbehälter mittels einer zweiten Verbindungsleitung mit dem Innenraum verbindbar ist und wobei der Innenraum mittels des Druckbehälters mit einem Überdruck gegenüber einem im Außenraum herrschenden Außendruck beaufschlagbar ist, wobei über den Filter bei einer Fehlfunktion, die zu einem Druckabfall im Innenraum führt, ein Druckausgleich erreicht werden kann.

Weiterhin wird diese Aufgabe durch eine elektrische Maschine der eingangs genannten Art dadurch gelöst, dass sie ein derartiges Schutzsystem aufweist.

Während des ordnungsgemäßen Betriebs weist der Innenraum der elektrischen Maschine in der Regel denselben Druck auf, wie jener, welcher im Außenraum herrscht. Wird die elektrische Maschine abgeschaltet oder tritt eine Fehlfunktion auf, welche zum Abschalten der elektrischen Maschine führt, so kann insbesondere während des Abkühlens der elektrischen Maschine ein Unterdruck im Innenraum entstehen. Besonders wenn die elektrische Maschine in einem staubigen Umfeld, insbesondere in einem Umfeld, in welchem zündfähiger Staub vorhanden ist, betrieben wird, besteht die Gefahr, dass Staub in den Innenraum eingesogen wird.

Diese unerwünschte Situation wird zuverlässig durch das vorgeschlagene Schutzsystem vermieden, indem mittels der ersten Verbindungsleitung, des Ventils und des Filters ein kontrollierter Druckausgleich ermöglicht wird, bei welchem Dank des Filters ein Eindringen von Staub in den Innenraum der elektrischen Maschine verhindert wird. Der Druckausgleich zwischen dem Unterdruck im Innenraum und dem vergleichsweise höheren Druck im Außenraum wird insbesondere dadurch erreicht, dass das erste gasförmige Medium vom Außenraum durch den Filter und durch das offene Ventil über die erste Verbindungsleitung in den Innenraum strömen kann. Dabei filtert der Filter das erste gasförmige Medium von Staub bzw. Staubpartikeln, so dass lediglich das erste gasförmige Medium ohne Staubpartikel in den Innenraum strömen kann. Durch die derartige Zufuhr des gefilterten, ersten gasförmigen Mediums wird zuverlässig verhindert, dass nicht gefiltertes Medium in den Innenraum eindringen kann.

Der Filter ist insbesondere derart ausgelegt, dass Staubpartikeln ab einer bestimmten Korngröße zurückgehalten werden können. Je nach Umfeld, in welcher die elektrische Maschine betrieben wird, können die Korngröße und damit der entsprechende Filter unterschiedlich gewählt werden. Dabei ist der Filter vorzugsweise derart zu wählen, dass ein dauerhafter Betrieb der elektrischen Maschine in dem gewählten Umfeld trotz der Staubbelastung gewährleistet ist.

Das vorgeschlagene Schutzsystem erlaubt somit einen Druckausgleich, welcher nicht mit der Einbringung von Staubpartikeln in den Innenraum der elektrischen Maschine einhergeht, so dass die elektrische Maschine anschließend wieder in Betrieb genommen werden kann, ohne dass eine aufwändige Entfernung von Staub aus dem Innenraum erforderlich wäre. Dadurch lassen sich der Schutz und insbesondere der Explosionsschutz der elektrischen Maschine zuverlässiger, weniger aufwändig und damit schlicht besser gestalten.

Vorzugsweise weist das Schutzsystem zusätzlich einen Außendrucksensor und einen Innendrucksensor auf, mittels welchem der aktuell vorliegende Druck im Außenraum bzw. Innendruck erfassbar ist und dessen Messwerte zur Betätigung bzw. Ansteuerung des Ventils berücksichtigbar sind. Entsprechend ist das Ventil ansteuerbar ausgeführt, wobei zur Ansteuerung beispielsweise eine Recheneinheit zum Einsatz kommt, welche zur Übermittlung von Steuerbefehlen drahtlos oder drahtgebunden mit dem Ventil verbunden ist. Weist das Schutzsystem die oben erläuterte Recheneinheit auf, ist der Außendrucksensor drahtlos oder drahtgebunden zur Übertragung seiner Sensordaten mit der Recheneinheit verbunden.

Während des ordnungsgemäßen Betriebs wird der Innenraum der elektrischen Maschine stets anhand des Druckbehälters mit einem Überdruck gegenüber dem Außenraum beaufschlagt. Tritt jedoch eine Fehlfunktion auf, welche dazu führt, dass der Druck im Innenraum abfällt, so kann insbesondere während des Abkühlens der elektrischen Maschine ein Unterdruck im Innenraum entstehen. Besonders wenn die die elektrische Maschine in einem staubigen Umfeld, insbesondere in einem Umfeld, in welchem zündfähiger Staub vorhanden ist, betrieben wird, besteht die Gefahr, dass Staub in den Innenraum eingezogen wird.

Mittels des Druckbehälters kann der Explosionsschutz weiter verbessert werden, indem Situationen mit Unterdruck im Innenraum weniger häufig auftreten. Tritt dennoch eine derartige Situation auf, kann mittels des oben erläuterten Filters, der ersten Versorgungsleitung und des Ventil ein Druckausgleich erreicht werden, bei welchem der Explosionsschutz der elektrischen Maschine gewahrt wird.

Bei einer weiteren vorteilhaften Ausgestaltung der Erfindung ist der Druckbehälter als Steuerkasten ausgeführt, wobei das Schutzsystem einen Innendrucksensor zur Erfassung eines Innendrucks im Innenraum aufweist, wobei das Schutzsystem eine Schalteinheit zur Regulierung des Innendrucks im Innenraum aufweist, wobei der Innendrucksensor mit der Schalteinheit verbunden ist.

Die Schalteinheit weist somit zumindest einen Anschluss für den Innendrucksensor auf, welcher drahtlos oder drahtgebunden mit der Schalteinheit verbunden ist. Dabei ist die Schalteinheit derart ausgestaltet, dass der Innendruck reguliert werden kann, indem er als Steuerkasten ausgestaltete Druckbehälter einen Auslass zum Innenraum aufweist. Beispielsweise kann ein weiteres Ventil vorgesehen sein, welches geöffnet wird, wenn der Innendruck unter einen vorgebbaren Grenzwert abfällt, so dass der Innenraum vom Steuerkasten mit zusätzlichem zweitem gasförmigem Medium versorgt werden kann. Vorteilhafterweise ist mittels des Steuerkastens auch das Ventil steuerbar, durch welches das erste gasförmige Medium vom Außenraum in den Innenraum eindringen kann.

Insbesondere ist zusätzlich ein Außendrucksensor vorgesehen, mittels welchem der Außendruck im Außenraum erfassbar ist und welcher ebenfalls mit der Schalteinheit verbunden ist. Vorzugsweise ist eine Versorgungsleitung zur Zufuhr von Druckluft an den Steuerkasten vorgesehen, wobei insbesondere die weiter unten erläuterte Druckluftversorgung zum Einsatz kommen kann.

Beispielsweise ist der Steuerkasten als pneumatischer oder elektro-pneumatischer Steuerkasten ausgeführt.

Bei einer weiteren vorteilhaften Ausgestaltung der Erfindung weist das Schutzsystem dabei eine Druckluftversorgung für den Druckbehälter auf.

Durch die Druckluftversorgung kann dem Druckbehälter das zweite gasförmige Medium zugeführt werden, welches stets frei von Staub, insbesondere zündbarem Material, ist. Beispielsweise kann die Druckluftversorgung als Kompressor, welcher mit einem entsprechenden Filter versehen ist, oder als Anschluss an ein Druckluftsystem ausgeführt sein. Insbesondere dank der oben erläuterten ersten Verbindungsleitung, dem Ventil und dem Filter kann ein zuverlässiger Explosionsschutz auch dann gewährleistet werden, wenn die Druckluftversorgung ausfällt. Dies ist beispielsweise der Fall, wenn der Kompressor defekt ist oder das Druckluftsystem eine Leckage aufweist.

Bei einer weiteren vorteilhaften Ausgestaltung der Erfindung ist das Ventil derart mit dem Druckbehälter wirkverbunden, dass das Ventil geöffnet ist, falls ein in dem Druckbehälter herrschender Druck einen Referenzdruck unterschreitet, und das Ventil geschlossen ist, falls der in dem Druckbehälter herrschende Druck den Referenzdruck überschreitet.

Durch die Wirkverbindung des Ventils mit dem Druckbehälter wird eine zuverlässige und an die Gegebenheiten anpassbare Steuerung des Ventils ermöglicht. Insbesondere kann dadurch eine Feinjustierung durchgeführt werden, welche die Besonderheiten der elektrischen Maschine, wie zum Beispiel größere oder kleinere Leckagen des Gehäuses der elektrischen Maschine, berücksichtigt.

Beispielsweise kann es sinnvoll sein, den Referenzdruck nur sehr geringfügig unterhalb des Außendrucks zu wählen oder den Referenzdruck sogar leicht oberhalb des Außendrucks zu wählen, falls das Gehäuse der elektrischen Maschine vergleichsweise große Leckagen aufweist. Bei einer derartigen elektrischen Maschine würde schon ein vergleichsweise geringer Unterdruck im Innenraum schnell dazu führen, dass das erste gasförmige Medium, insbesondere samt dem darin befindlichen zündfähigen Staub, über die Leckagen ungefiltert in den Innenraum eindringt. Insbesondere wenn das Schutzsystem ein Rückhalteelement aufweist, würde ein Referenzdruck oberhalb des Außendrucks vorteilhafterweise nicht dazu führen, dass ein im Innenraum herrschender Überdruck über die erste Verbindungsleitung an den Außenraum abgegeben würde. Ein derartiges Rückhalteelement wird beispielhaft weiter unten erläutert.

Die Wirkverbindung ist insbesondere der Gestalt, dass ein Öffnen des Ventils bewirkt wird, wenn der im Druckbehälter herrschende Druck unter den Referenzdruck fällt bzw. den Referenzdruck unterschreitet, so dass insbesondere bei Vorliegen eines Unterdrucks im Innenraum ein Druckausgleich vorgenommen wird. Entsprechend kann die Wirkverbindung der Gestalt sein, dass ein Schließen des Ventils bewirkt wird, wenn der im Druckbehälter herrschende Druck über den Referenzdruck steigt bzw. den Referenzdruck überschreitet.

Vorzugsweise ist die Wirkverbindung derart ausgestaltet, dass ein Drucksensor zur Messung des im Druckbehälter herrschenden Druckes und eine mit dem Drucksensor verbundene Recheneinheit vorgesehen sind, wobei der Recheneinheit die Sensordaten des Drucksensors zuführbar sind. In der Recheneinheit kann der Referenzdruck hinterlegt werden, so dass die Recheneinheit ein entsprechendes Steuersignal an das mit der Recheneinheit verbundene Ventil ausgeben kann, um das Ventil zu öffnen oder zu schließen bzw. geöffnet oder geschlossen zu halten. Hierzu ist auch das Ventil entsprechend ausgelegt.

Vorzugsweise ist das Ventil dabei derart mit dem Druckbehälter wirkverbunden, dass das Ventil geschlossen ist, falls der in dem Druckbehälter herrschende Druck gleich dem Referenzdruck ist. Insbesondere kann die Recheneinheit als die oben erläuterte Schalteinheit ausgeführt sein.

Bei einer weiteren vorteilhaften Ausgestaltung der Erfindung ist der Referenzdruck dabei gleich dem aktuell vorliegenden Außendruck.

Insbesondere wird der Referenzdruck einem sich ändernden Außendruck angepasst. So bewirken beispielsweise Wetterereignisse, wie Hochdruck- oder Tiefdruckgebiete, oder das Betreiben der elektrischen Maschine auf einer geänderten Meereshöhe unterschiedliche Außendrücke, welche insbesondere vom Normdruck bei Normbedingungen von 1013 hPa abweichen können. Ein besonders zuverlässiger Explosionsschutz wird insbesondere dadurch erreicht, dass das Schutzsystem dazu ausgelegt ist, den aktuell vorliegenden Außendruck zu erfassen und beispielsweise bei der Ansteuerung des Ventils und gegebenenfalls des Rückhalteelements zu berücksichtigen. Unvorhersehbare Umwelteinflüsse können dadurch sicher ausgeglichen werden.

Beispielsweise weist das vorgeschlagene Schutzsystem hierzu einen Außendrucksensor auf, mittels welchem der aktuell vorliegende Außendruck erfassbar ist. Insbesondere wenn die oben erläuterte Recheneinheit vorgesehen ist, ist der Außendrucksensor zur Übertragung seiner Sensordaten mit der Recheneinheit verbunden, wobei der erfasste, aktuell vorliegende Außendruck in der Recheneinheit als Referenzdruck hinterlegt wird.

Bei einer weiteren vorteilhaften Ausgestaltung der Erfindung ist der Druckbehälter mittels einer Steuerdruckleitung mit dem Ventil verbunden, wobei das Ventil derart ausgestaltet ist, dass ein in dem Druckbehälter herrschender Druck als Steuerdruck dient und das Ventil geöffnet ist, falls der Steuerdruck kleiner als der Außendruck ist, und das Ventil geschlossen ist, falls der Steuerdruck größer als der Außendruck ist.

Die Steuerdruckleitung ermöglicht, den im Druckbehälter herrschenden Druck als Steuerdruck dem Ventil zuzuführen, welches abhängig vom Steuerdruck und vom Außendruck öffnet bzw. in einer geöffneten Position ist oder schließt bzw. in einer geschlossenen Position ist. Hierzu ist das Ventil vorzugsweise derart ausgeführt, dass ein Vergleich des Steuerdruckes mit dem Außendruck vorgenommen werden kann.

Die erläuterte Verbindung des Druckbehälters mit dem Ventil anhand der Steuerdruckleitung kann insbesondere die weiter oben ausgeführte Wirkverbindung des Ventils mit dem Druckbehälter darstellen.

Insbesondere kann der Außendruck aktuell erfasst werden, was Vorteile bietet, wenn der Außendruck aufgrund von Wettereinflüssen und dergleichen variiert, wie weiter oben ausgeführt.

Vorteilhafterweise ist das Ventil dabei derart ausgestaltet, dass das Ventil geschlossen ist, falls der Steuerdruck gleich dem Außendruck ist.

Bei einer weiteren vorteilhaften Ausgestaltung der Erfindung ist das Ventil als pneumatisch ansteuerbares Ventil ausgeführt.

Das Ventil ist vorzugsweise rein pneumatisch ansteuerbar bzw. betreibbar und bietet den Vorteil, dass es vergleichsweise leicht die Anforderungen an ein explosionsgeschützt ausgeführtes Bauteil erfüllt. Insbesondere trennt ein derartiges Ventil eine staubbelastete Umgebung zuverlässig von einer Umgebung, die staubfrei gehalten werden muss. Weiterhin weist ein solches Ventil eine hohe Ausfallsicherheit auf. Vorteilhafterweise ist das Ventil dabei als federbelastetes, pneumatisch ansteuerbares Ventil ausgeführt.

Vorzugsweise wird das pneumatisch ansteuerbare Ventil in Verbindung mit dem oben erläuterten Druckbehälter eingesetzt, wobei das Ventil vorteilhafterweise mit dem Druckbehälter wirkverbunden ist. Beispielsweise kann der Druckbehälter hierfür als Steuerkasten, insbesondere pneumatischer oder elektro-pneumatischer Steuerkasten, ausgeführt werden. Wie oben erläutert, kann hierzu beispielsweise eine Steuerdruckleitung zum Einsatz kommen, wobei auch der oben erläuterte Referenzdruck bzw. Steuerdruck Verwendung finden können.

Bei einer weiteren vorteilhaften Ausgestaltung der Erfindung ist der Filter für zündfähigen Staub undurchlässig.

Die Auslegung des Filters speziell auf den zündfähigen Staub und entsprechende Staubpartikel ermöglicht zuverlässig, das Eindringen von zündfähigem Staub in den Innenraum der elektrischen Maschine zu verhindern. Dadurch wird der Explosionsschutz der Maschine deutlich verbessert.

Bei einer weiteren vorteilhaften Ausgestaltung der Erfindung weist das Schutzsystem ein Rückhalteelement auf, welches einen Volumenstrom durch die erste Verbindungsleitung vom Außenraum zum Innenraum ermöglicht und welches einen Volumenstrom durch die erste Verbindungsleitung vom Innenraum zum Außenraum unterbindet.

Das Ventil und die erste Verbindungsleitung ermöglichen insbesondere einen Volumenstrom vom Außenraum zum Innenraum der Maschine, sofern das Ventil geöffnet ist. Dadurch, dass das Schutzsystem, insbesondere das Ventil und/oder die erste Verbindungsleitung, das Rückhalteelement aufweist kann zuverlässig ein Volumenstrom vom Innenraum zum Außenraum unterbunden werden. Ein derartiger Volumenstrom könnte sich unter Umständen bei ansonsten geöffnetem Ventil und ohne das Rückhalteelement insbesondere bei einem Überdruck im Innenraum der elektrischen Maschine einstellen. Das Rückhalteelement kann beispielsweise als Rückstauklappe oder als Überdruckventil ausgestaltet sein, welche bzw. welches prinzipiell ausschließlich für einen Volumenstrom vom Außenraum in den Innenraum durchgängig ist. Prinzipiell kann das Rückhalteelement auch in das Ventil integriert ausgeführt werden.

Bei einer weiteren vorteilhaften Ausgestaltung der Erfindung ist der Filter strömungstechnisch bezüglich des vom Außenraum in den Innenraum eindringenden, ersten gasförmigen Mediums stromaufwärts des Ventils angeordnet.

Durch eine derartige Anordnung des Filters wird verhindert, dass das Ventil in Kontakt mit dem zündfähigen Material kommt, wodurch eine Fehlfunktion beispielsweise durch eine Blockade oder ein Festsitzen des Ventils verhindert wird. Dadurch werden die Verfügbarkeit und insbesondere die Zuverlässigkeit des vorgeschlagenen Schutzsystems erhöht.

Vorzugsweise ist der Filter an jenem Ende der ersten Verbindungsleitung angeordnet, welche in den Außenraum hineinragt. Dadurch wird verhindert, dass zündfähiges Material überhaupt in die erste Verbindungsleitung eindringen kann.

Bei einer weiteren vorteilhaften Ausgestaltung der Erfindung ist die elektrische Maschine mit Hochspannung, mit mindestens 1 MW, insbesondere mindestens 5 MW, elektrischer Leistung und/oder explosionsgeschützt betreibbar.

Als Hochspannung wird dabei eine elektrische Spannung von zumindest 1 kV, insbesondere zumindest 5 kV, angesehen.

Die elektrische Maschine kann beispielsweise als Generator oder Motor ausgeführt sein, insbesondere als Antriebsmotor für einen Mühlenantrieb oder dergleichen. Die vorgeschlagene elektrische Maschine ist dabei besonders geeignet für einen Betrieb in einem staubigen bzw. explosionsgefährdeten Umfeld.

Im Folgenden wird die Erfindung anhand der in den Figuren dargestellten Ausführungsbeispiele näher beschrieben und erläutert. Es zeigen:
- FIG 1 & 3: ein erstes und zweites Beispiel eines Schutzsystems und
- FIG 2, 4 - 6: ein erstes bis viertes Ausführungsbeispiel des erfindungsgemäßen Schutzsystems.

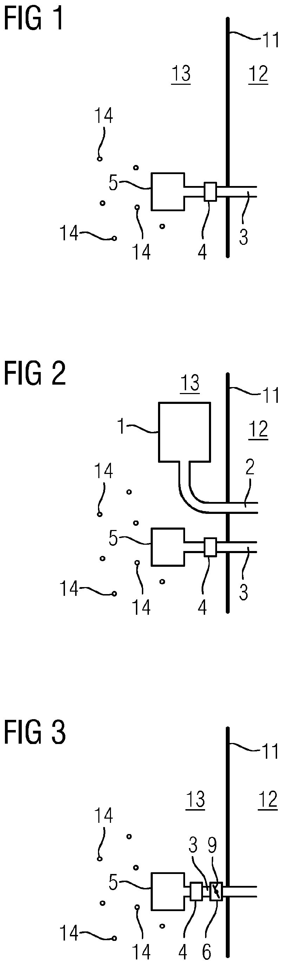

Figur 1 zeigt ein erstes Beispiel eines Schutzsystems. Das Schutzsystem ist dabei an einer elektrischen Maschine angebracht, welche ein Gehäuse 11 aufweist, welches einen Innenraum 12 gegenüber einem Außenraum 13 der elektrischen Maschine abgrenzt.

Das Schutzsystem weist einen für Staubpartikel 14 undurchlässigen Filter 5, ein Ventil 4 und eine erste Verbindungsleitung 3 auf, mittels welcher der Innenraum 12 mit dem Außenraum 13 verbindbar ist. Dabei sind das Ventil 4 und die erste Verbindungsleitung 3 derart ausgestaltet, dass die erste Verbindungsleitung 3 bei geschlossenem Ventil 4 nicht durchgängig ist und dass ein erstes gasförmiges Medium vom Außenraum 13 bei geöffnetem Ventil 4 in den Innenraum 12 eindringen kann. Der Filter 5 ist dabei derart angeordnet, dass das durch die erste Verbindungsleitung 3 vom Außenraum 13 in den Innenraum 12 eindringende, erste gasförmige Medium filterbar ist.

Insbesondere ist der Filter 5 undurchlässig für zündfähigen Staub 14, so dass die elektrische Maschine mit einem verbesserten Explosionsschutz ausgestattet ist. Im Rahmen des Beispiels ist dabei der Filter 5 strömungstechnisch bezüglich des vom Außenraum 13 in den Innenraum 12 eindringenden, ersten gasförmigen Mediums stromaufwärts des Ventils 4 angeordnet.

Vorzugsweise weist das Schutzsystem zusätzlich einen Außendrucksensor auf, mittels welchem der aktuell vorliegende Druck im Außenraum 12 erfassbar ist und dessen Messwerte zur Betätigung bzw. Ansteuerung des Ventils berücksichtigbar sind. Weist das Schutzsystem die oben erläuterte Recheneinheit auf, ist der Außendrucksensor zur Übertragung seiner Sensordaten mit der Recheneinheit verbunden.

Figur 2 zeigt ein erstes Ausführungsbeispiel des erfindungsgemäßen Schutzsystems. Gleiche Bezugszeichen wie in Figur 1 bezeichnen dabei gleiche Gegenstände.

Im Vergleich zum ersten Beispiel eines Schutzsystems weist das Schutzsystem des ersten Ausführungsbeispiels des erfindungsgemäßen Schutzsystems zusätzlich einen Druckbehälter 1 zur Bevorratung eines zweiten gasförmigen Mediums auf, wobei der Druckbehälter 1 mittels einer zweiten Verbindungsleitung 2 mit dem Innenraum 12 verbunden ist. Der Innenraum 12 ist mittels des Druckbehälters 1 mit einem Überdruck gegenüber einem im Außenraum 13 herrschenden Außendruck beaufschlagbar. Insbesondere kann der Druckbehälter 1 als Steuerkasten ausgeführt sein, welcher weiter oben erläutert wurde.

Vorzugsweise ist das Ventil 4 derart mit dem Druckbehälter 1 wirkverbunden, dass das Ventil 4 geöffnet ist, falls ein in dem Druckbehälter herrschender Druck einen Referenzdruck unterschreitet, und das Ventil geschlossen ist, falls der im Druckbehälter 1 herrschende Druck den Referenzdruck überschreitet. Die Wirkverbindung kann beispielsweise mittels eines Drucksensors zur Messung des im Druckbehälter 1 bzw. im Innenraum 12 herrschenden Druckes und einer Recheneinheit verwirklicht werden, welche mit dem Drucksensor und mit dem Ventil zur Datenübermittlung verbunden ist. Der Recheneinheit können somit die Sensordaten des Drucksensors zugeführt werden, wobei die Recheneinheit ein entsprechendes Steuersignal an das verbundene Ventil 4 ausgeben kann.

Vorzugsweise weist das Schutzsystem zusätzlich einen Außendrucksensor auf, mittels welchem der aktuell vorliegende Druck im Außenraum 12 erfassbar ist und dessen Messwerte bei der Wirkverbindung berücksichtigbar sind. Weist das Schutzsystem die oben erläuterte Recheneinheit auf, ist der Außendrucksensor zur Übertragung seiner Sensordaten mit der Recheneinheit verbunden.

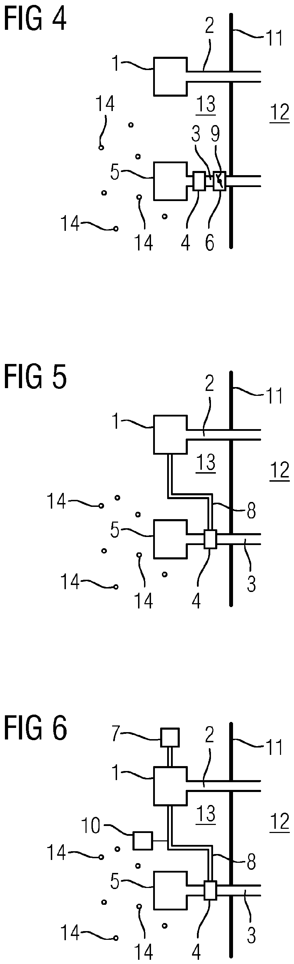

Figur 3 bzw. 4 zeigt ein zweites Beispiel eines Schutzsystems bzw. ein zweites Ausführungsbeispiel des erfindungsgemäßen Schutzsystems.

Im Vergleich zum Schutzsystem des ersten Beispiels bzw. des ersten Ausführungsbeispiels des erfindungsgemäßen Schutzsystems weist das Schutzsystem des zweiten Beispiels eines Schutzsystems bzw. zweiten Ausführungsbeispiels des erfindungsgemäßen Schutzsystems zusätzlich ein Rückhalteelement 6 auf, welches in der ersten Verbindungsleitung 3 zwischen dem Ventil 4 und dem Innenraum 12 angeordnet ist. Das Rückhalteelement 6 ermöglicht einen Volumenstrom durch die erste Verbindungsleitung 3 vom Außenraum 13 in den Innenraum 12 und unterbindet einen Volumenstrom vom Innenraum 12 zum Außenraum 13. Hierzu weist das Rückhalteelement 6 beispielsweise eine Art Rückschlagklappe 9 auf, wie in Figur 3 bzw. 4 angedeutet.

Figur 5 zeigt ein drittes Ausführungsbeispiel des erfindungsgemäßen Systems. Im Vergleich zum ersten Ausführungsbeispiel weist das Schutzsystem des dritten Ausführungsbeispiels zusätzlich eine Steuerdruckleitung 8 auf, mittels welcher der Druckbehälter 1 mit dem Ventil 4 verbunden ist. Dabei dient ein in dem Druckbehälter 1 herrschender Druck als Steuerdruck des Ventils 4. Das Ventil 4 ist vorzugsweise derart ausgestaltet, dass das Ventil 4 geöffnet bzw. geschlossen ist, falls der Steuerdruck kleiner bzw. größer als der Außendruck ist. Insbesondere ist das Ventil 4 hierzu pneumatisch ansteuerbar ausgeführt.

Beispielsweise ist der Druckbehälter 1 als der oben erläuterte Steuerkasten ausgeführt, wobei weiterhin ein Innendrucksensor zur Erfassung eines Innendrucks im Innenraum und eine Schalteinheit zur Regulierung des Innendrucks im Innenraum vorgesehen sein können.

Figur 6 zeigt ein viertes Ausführungsbeispiel des erfindungsgemäßen Systems. Im Vergleich zum dritten Ausführungsbeispiel weist das Schutzsystem des vierten Ausführungsbeispiels zusätzlich einen Außendrucksensor 10 auf, mittels welchem der aktuell vorliegende Druck im Außenraum 12 erfassbar ist. Weist das Schutzsystem die oben erläuterte Recheneinheit auf, ist der Außendrucksensor zur Übertragung seiner Sensordaten mit der Recheneinheit verbunden. Dabei kann die Recheneinheit als Schalteinheit für den Steuerkasten ausgeführten Druckbehälter 1 ausgelegt sein, wobei die Schalteinheit mit einem Innendrucksensor und dem Außendrucksensor 10 verbunden ist.

Weiterhin weist das Schutzsystem eine Druckluftversorgung 7 für den Druckbehälter 1 auf, wobei die Druckluftversorgung 7 als optional angesehen werden kann. Weiterhin kann eine derartige Druckluftversorgung 7 bei den anderen Ausführungsbeispielen vorgesehen werden.

## Patentansprüche

1. Schutzsystem für eine elektrische Maschine,
wobei die elektrische Maschine ein Gehäuse (11) aufweist, welches einen Innenraum (12) der elektrischen Maschine gegenüber einem die elektrische Maschine umgebenden Außenraum (13) abgrenzt,
wobei das Schutzsystem
- eine erste Verbindungsleitung (3), mittels welcher der Innenraum (12) mit dem Außenraum (13) verbindbar ist,
- ein Ventil (4) und
- einen Filter (5) aufweist, welcher für Staub (14) undurchlässig ist,
wobei das Ventil (4) und die erste Verbindungsleitung (3) derart ausgestaltet sind, dass die erste Verbindungsleitung (3) bei geschlossenem Ventil (4) nicht durchgängig ist,
wobei das Ventil (4) und die erste Verbindungsleitung (3) derart ausgestaltet sind, dass ein erstes gasförmiges Medium vom Außenraum (13) bei geöffnetem Ventil (4) in den Innenraum (12) eindringen kann,
wobei der Filter (5) derart angeordnet ist, dass das durch die erste Verbindungsleitung (3) vom Außenraum (13) in den Innenraum (12) eindringende, erste gasförmige Medium filterbar ist
wobei das Schutzsystem einen Druckbehälter (1) zur Bevorratung eines zweiten gasförmigen Mediums aufweist,
wobei der Druckbehälter (1) mittels einer zweiten Verbindungsleitung (2) mit dem Innenraum (12) verbindbar ist und wobei der Innenraum (12) mittels des Druckbehälters (1) mit einem Überdruck gegenüber einem im Außenraum (13) herrschenden Außendruck beaufschlagbar ist,
wobei über den Filter (5) bei einer Fehlfunktion, die zu einem Druckabfall im Innenraum (12) führt, ein Druckausgleich erreicht werden kann.

2. Schutzsystem nach Anspruch 1,
wobei der Druckbehälter (1) als Steuerkasten ausgeführt ist,
wobei das Schutzsystem einen Innendrucksensor zur Erfassung eines Innendrucks im Innenraum (12) aufweist,
wobei das Schutzsystem eine Schalteinheit zur Regulierung des Innendrucks im Innenraum (12) aufweist,
wobei der Innendrucksensor mit der Schalteinheit verbunden ist.

3. Schutzsystem nach einem der vorhergehenden Ansprüche, wobei das Schutzsystem eine Druckluftversorgung (7) für den Druckbehälter (1) aufweist.

4. Schutzsystem nach einem der vorhergehenden Ansprüche, wobei das Ventil (4) derart mit dem Druckbehälter (1) wirkverbunden ist, dass
- das Ventil (4) geöffnet ist, falls ein in dem Druckbehälter (1) herrschender Druck einen Referenzdruck unterschreitet, und
- das Ventil (4) geschlossen ist, falls der in dem Druckbehälter (1) herrschende Druck den Referenzdruck überschreitet.

5. Schutzsystem nach Anspruch 4,
wobei der Referenzdruck gleich dem aktuell vorliegenden Außendruck ist.

6. Schutzsystem nach einem der vorhergehenden Ansprüche, wobei der Druckbehälter (1) mittels einer Steuerdruckleitung (8) mit dem Ventil (4) verbunden ist,
wobei das Ventil (4) derart ausgestaltet ist, dass
- ein in dem Druckbehälter (1) herrschender Druck als Steuerdruck dient und
- das Ventil (4) geöffnet ist, falls der Steuerdruck kleiner als der Außendruck ist, und
- das Ventil (4) geschlossen ist, falls der Steuerdruck größer als der Außendruck ist.

7. Schutzsystem nach einem der vorhergehenden Ansprüche, wobei das Ventil (4) als pneumatisch ansteuerbares Ventil (4) ausgeführt ist.

8. Schutzsystem nach einem der vorhergehenden Ansprüche, wobei der Filter (5) für zündfähigen Staub (14) undurchlässig ist.

9. Schutzsystem nach einem der vorhergehenden Ansprüche, wobei das Schutzsystem ein Rückhalteelement (6) aufweist, welches einen Volumenstrom durch die erste Verbindungsleitung (3) vom Außenraum (13) zum Innenraum (12) ermöglicht und welches einen Volumenstrom durch die erste Verbindungsleitung (3) vom Innenraum (12) zum Außenraum (13) unterbindet.

10. Schutzsystem nach einem der vorhergehenden Ansprüche, wobei der Filter (5) strömungstechnisch bezüglich des vom Außenraum (13) in den Innenraum (12) eindringenden, zweiten gasförmigen Mediums stromaufwärts des Ventils (4) angeordnet ist.

11. Elektrische Maschine aufweisend
- ein Gehäuse (11), welches einen Innenraum (12) der elektrischen Maschine gegenüber einem die elektrische Maschine umgebenden Außenraum (13) abgrenzt, und
- ein Schutzsystem nach einem der vorhergehenden Ansprüche.

12. Elektrische Maschine nach Anspruch 11,
wobei die elektrische Maschine mit Hochspannung, mit mindestens 1 MW, insbesondere mindestens 5 MW, elektrischer Leistung und/oder explosionsgeschützt betreibbar ist.

## Claims

1. Protection system for an electrical machine,
wherein the electrical machine has a housing (11), which delimits an internal space (12) in the electrical machine from an external space (13) which surrounds the electrical machine, wherein the protection system has
- a first connecting line (3), by means of which the internal space (12) can be connected to the external space (13),
- a valve (4) and
- a filter (5), which is impermeable to dust (14),
wherein the valve (4) and the first connecting line (3) are designed such that the first connecting line (3) is impassable when the valve (4) is closed, wherein the valve (4) and the first connecting line (3) are designed such that a first gaseous medium can enter the internal space (12) from the external space (13) when the valve (4) is open,
wherein the filter (5) is arranged here such that the first gaseous medium that enters the internal space (12) from the external space (13) through the first connecting line (3) can be filtered,
wherein the protection system has a pressure vessel (1) for stockpiling a second gaseous medium,
wherein the pressure vessel (1) can be connected by means of a second connecting line (2) to the internal space (12) and wherein by means of the pressure vessel (1) the internal space (12) can be applied with an overpressure compared with an external pressure prevailing in the external space (13),
wherein in the case of a malfunction, which results in a drop in pressure in the internal space (12), a pressure equalisation can be achieved by way of the filter (5).

2. Protection system according to claim 1,
wherein the pressure vessel (1) is embodied as a control box, wherein the protection system has an internal pressure sensor for detecting an internal pressure in the internal space (12), wherein the protection system has a switching unit for regulating the internal pressure in the internal space (12), wherein the internal pressure sensor is connected to the switching unit.

3. Protection system according to one of the preceding claims,
wherein the protection system has a pressurised air supply (7) for the pressure vessel (1).

4. Protection system according to one of the preceding claims,
wherein the valve (4) is actively connected to the pressure vessel (1) such that
- the valve (4) is opened, if a pressure prevailing in the pressure vessel (1) does not reach a reference pressure, and
- the valve (4) is closed, if the pressure prevailing in the pressure vessel (1) exceeds the reference pressure.

5. Protection system according to claim 4,
wherein the reference pressure is equal to the external pressure currently available.

6. Protection system according to one of the preceding claims,
wherein the pressure vessel (1) is connected by means of a control pressure line (8) to the valve (4),
wherein the valve (4) is designed such that
- a pressure prevailing in the pressure vessel (1) serves as a control pressure and
- the valve (4) is opened if the control pressure is less than the external pressure, and
- the valve (4) is closed if the control pressure is greater than the external pressure.

7. Protection system according to one of the preceding claims, wherein the valve (4) is embodied as a pneumatically controllable valve (4).

8. Protection system according to one of the preceding claims,
wherein the filter (5) is impermeable to flammable dust (14).

9. Protection system according to one of the preceding claims,
wherein the protection system has a retaining element (6), which permits a volume flow through the first connecting line (3) from the external space (13) to the internal space (12) and which prevents a volume flow from the internal space (12) to the external space (13) through the first connecting line (3) .

10. Protection system according to one of the preceding claims,
wherein, in terms of flow, the filter (5) is arranged upstream of the valve (4) in respect of the second gaseous medium entering the internal space (12) from the external space (13).

11. Electrical machine having
- a housing (11), which delimits an internal space (12) in the electrical machine from an external space (13) which surrounds the electrical machine, and
- a protection system as claimed in one of the preceding claims.

12. Electrical machine according to claim 11,
wherein the electrical machine can be operated with high voltage, with electrical power of at least 1 MW, in particular at least 5 MW, and/or in an explosion-protected manner.

## Revendications

1. Système de protection d'une machine électrique,
dans lequel la machine électrique a une enveloppe (11), qui délimite un espace (12) intérieur de la machine électrique par rapport à un espace (13) extérieur entourant la machine électrique,
dans lequel le système de protection a
- un premier conduit (3) de liaison, au moyen duquel l'espace (12) intérieur peut communiquer avec l'espace (13) extérieur,
- une vanne (4) et
- un filtre (5), qui est imperméable à de la poussière (14),
dans lequel la vanne (4) et le premier conduit (3) de liaison sont conformés de manière à ne plus pouvoir passer dans le premier conduit (3) de liaison, lorsque la vanne (4) est fermée,
dans lequel la vanne (4) et le premier conduit (3) de liaison sont conformés de manière à ce qu'un premier milieu gazeux de l'espace (13) extérieur puisse, lorsque la vanne (4) est ouverte, pénétrer dans l'espace (12) intérieur, dans lequel le filtre (5) est disposé, de manière à pouvoir filtrer le premier milieu gazeux, pénétrant, par le premier conduit (3) de liaison, de l'espace (13) extérieur dans l'espace (12) intérieur,
dans lequel le système de protection a un récipient (1) sous pression de mise en réserve d'un deuxième milieu gazeux,
dans lequel le réservoir (1) sous pression peut communiquer avec l'espace (12) intérieur, au moyen d'un deuxième conduit (4) de liaison, et dans lequel l'espace (2) intérieur peut être soumis, au moyen du réservoir (1) sous pression, à une surpression par rapport à la pression extérieure régnant dans l'espace (13) extérieur,
dans lequel une compensation de pression peut être obtenue par le filtre (5), lors d'un fonctionnement défectueux, qui entraîne une chute de pression dans l'espace (12) intérieur.

2. Système de protection suivant la revendication 1,
dans lequel le réservoir (1) sous pression est réalisé sous la forme d'un caisson de commande,
dans lequel le système de protection a un capteur de pression intérieure pour détecter une pression intérieure dans l'espace (12) intérieur,
dans lequel le système de protection a une unité de commutation pour réguler la pression intérieure dans l'espace (12) intérieur,
dans lequel le capteur de pression intérieure est relié à l'unité de commutation.

3. Système de protection suivant l'une des revendications précédentes,
dans lequel le système de protection a une alimentation (7) en air comprimé pour le récipient (1) sous pression.

4. Système de protection suivant l'une des revendications précédentes,
dans lequel la vanne (4) est reliée en action au récipient (1) sous pression, de manière à ce que
- la vanne (4) soit ouverte, si une pression régnant dans le récipient (1) sous pression devient inférieure à une pression de référence, et
- la vanne (4) soit fermée, si la pression régnant dans le récipient (1) sous pression dépasse la pression de référence.

5. Système de protection suivant la revendication 4,
dans lequel la pression de référence est égale à la pression extérieure présente.

6. Système de protection suivant l'une des revendications précédentes,
dans lequel le récipient (1) sous pression communique avec la vanne (4), au moyen d'un conduit (8) de pression de commande,
dans lequel la vanne (4) est constituée, de manière
- à ce qu'une pression régnant dans le réservoir (1) sous pression serve de pression de commande et
- à ce que la vanne (4) soit ouverte, si la pression de commande est plus basse que la pression extérieure, et
- à ce que la vanne (4) soit fermée, si la pression de commande est plus haute que la pression extérieure.

7. Système de protection suivant l'une des revendications précédentes,
dans lequel la vanne (4) est réalisée sous la forme d'une vanne (4) pouvant être excitée pneumatiquement.

8. Système de protection suivant l'une des revendications précédentes,
dans lequel le filtre (5) est imperméable à de la poussière (14) inflammable.

9. Système de protection suivant l'une des revendications précédentes,
dans lequel le système de protection a un élément (6) de retenue, qui rend possible un courant en volume dans le premier conduit (3) de liaison allant de l'espace (13) extérieur à l'espace (12) intérieur et qui interdit un courant en volume dans le premier conduit (3) de liaison allant de l'espace (12) intérieur à l'espace (13) extérieur.

10. Système de protection suivant l'une des revendications précédentes,
dans lequel le filtre (5) est monté en amont de la vanne (4), en technique d'écoulement, par rapport au deuxième milieu gazeux pénétrant de l'espace (13) extérieur dans l'espace (12) intérieur.

11. Machine électrique comportant
- une enveloppe (11), qui délimite un espace (12) intérieur de la machine électrique par rapport à un espace (13) extérieur entourant la machine électrique, et
- un système de protection suivant l'une des revendications précédentes.

12. Machine électrique suivant la revendication 11,
dans laquelle la machine électrique peut fonctionner à une tension haute, à une puissance électrique d'au moins 1 MW, notamment d'au moins 5 MW et/ou en étant protégée vis-à-vis de l'explosion.
